Europäisches Patentamt

(19) European Patent Office

Office européen des brevets

(11) Numéro de publication : **0 135 412**
**B1**

(12) **FASCICULE DE BREVET EUROPÉEN**

(45) Date de publication du fascicule du brevet :
23.12.87

(51) Int. Cl.⁴ : **H 04 M 19/08**

(21) Numéro de dépôt : **84401488.6**

(22) Date de dépôt : **13.07.84**

(54) **Circuit d'alimentation régulée notamment pour poste téléphonique.**

(30) Priorité : **22.07.83 FR 8312173**

(43) Date de publication de la demande :
**27.03.85 Bulletin 85/13**

(45) Mention de la délivrance du brevet :
**23.12.87 Bulletin 87/52**

(84) Etats contractants désignés :
**DE FR GB IT NL SE**

(56) Documents cités :
**EP-A- 0 023 714**
**DE-A- 3 029 895**
**GB-A- 2 052 213**

(73) Titulaire : **THOMSON-CSF**
**173, Boulevard Haussmann**
**F-75379 Paris Cedex 08 (FR)**

(72) Inventeur : **Kaire, Jean-Claude**
**THOMSON-CSF SCPI 173, bld Haussmann**
**F-75379 Paris Cedex 08 (FR)**

(74) Mandataire : **Guérin, Michel et al**
**THOMSON-CSF SCPI 19, avenue de Messine**
**F-75008 Paris (FR)**

EP 0 135 412 B1

## Description

La présente invention concerne les circuits d'alimentation en tension continue qui reçoivent leur énergie d'une ligne parcourue par des signaux de tension alternatifs et qui présentent une impédance constante.

Elle s'applique plus particulièrement aux postes téléphoniques d'abonnés, qui reçoivent de la ligne téléphonique à laquelle ils sont raccordés, des signaux alternatifs (signal de sonnerie, ou signal de conversation) dont ils tirent parfois leur énergie (en sonnerie), cette énergie étant aussi dans certaines configurations (en conversation) fournie par un signal continu.

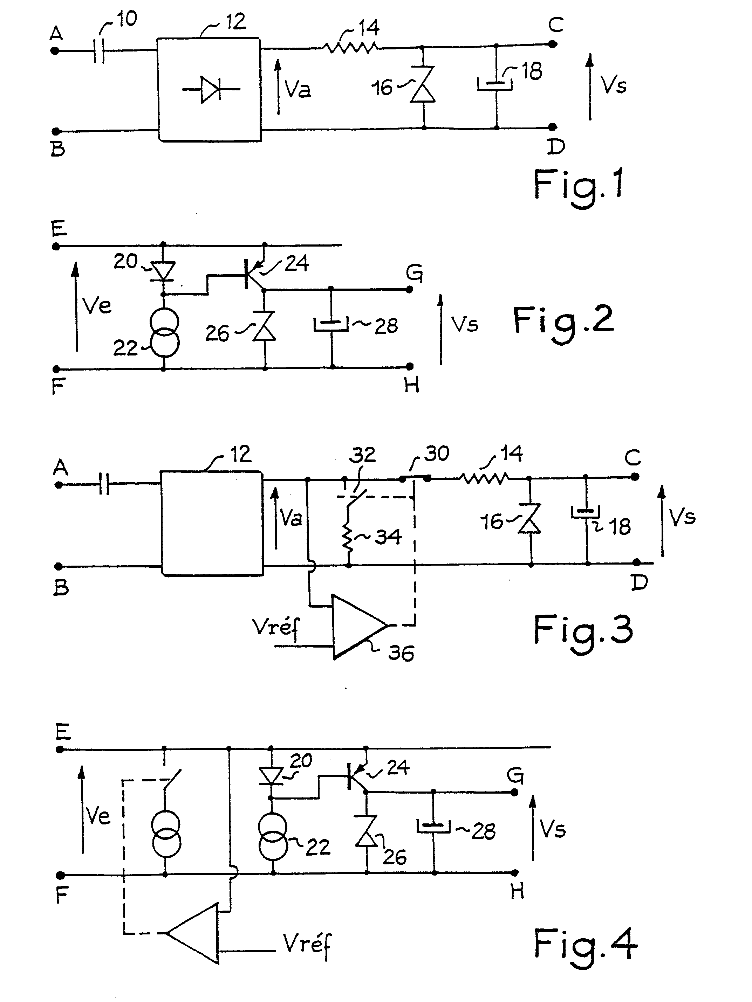

A titre d'exemple, le poste d'abonné peut comprendre un circuit d'alimentation en tension continue pour la sonnerie du téléphone. Ce circuit, sous sa forme la plus simple, est représenté à la figure 1 : il est raccordé par deux bornes d'entrée A et B à la ligne téléphonique non représentée ; il comprend un condensateur de découplage 10, un pont redresseur 12, une impédance en série 14 et un organe régulateur de tension constitué par un montage en parallèle d'une diode Zener 16 et d'un condensateur de lissage 18 ; la tension de sortie Vs de cette alimentation est prise sur deux bornes de sortie C et D entre lesquelles sont placées en parallèle le condensateur 18 et la diode Zener 16.

Dans cet exemple de la figure 1, l'impédance 14 a un rôle d'adaptation à l'impédance de la ligne téléphonique.

Les spécifications du réseau téléphonique peuvent imposer notamment que l'impédance du poste d'abonné, vue de la ligne, soit constante et n'introduise pas de distorsion de signal. Or, lorsqu'on est en phase de sonnerie, un signal alternatif de grande amplitude est appliqué à l'entrée du pont redresseur. Tout va bien pendant les instants où la tension d'entrée est, en valeur absolue, supérieure à la tension continue de sortie Vs (définie par la diode Zener) : l'impédance vue des entrées A et B est sensiblement égale à la valeur de l'impédance 14 et du condensateur 10 ; mais, lorsque la tension d'entrée descend, en valeur absolue, au-dessous de Vs, le pont redresseur se polarise à l'envers (les diodes du pont se présentent toutes en polarisation inverse) et l'impédance vue de l'entrée devient brutalement très élevée. A chaque demi-alternance de la tension d'entrée se produit donc une discontinuité brutale d'impédance, qui n'est pas admissible d'après les spécifications du réseau téléphonique (cette discontinuité d'impédance se traduit par une discontinuité du courant débité par la ligne et par des fréquences harmoniques élevées et audibles créant de la diaphonie dans l'ensemble du réseau).

Dans un autre exemple, certains postes téléphoniques d'abonné peuvent comprendre un microprocesseur, qui doit être alimenté par une tension continue de quelques volts, issue ici aussi de la ligne téléphonique, mais cette fois en phase de conversation et non en phase de sonnerie. Cette tension peut être obtenue par un circuit d'alimentation dont un schéma simplifié est représenté à la figure 2. Ce circuit comprend des bornes d'entrée E et F raccordées via un pont de diodes à la ligne téléphonique non représentée, une diode 20 en série avec une source de courant 22 entre les bornes E et F, un transistor PNP 24 dont l'émetteur et la base sont raccordés respectivement à l'anode et à la cathode de la diode 20, et dont le collecteur est en série avec une diode Zener 26 reliée par ailleurs à la masse ; un condensateur 28 de filtrage est en parallèle sur la diode Zener 26 et sur deux bornes de sortie G et H qui servent à fournir une tension continue Vs pour l'alimentation du microprocesseur. Les spécifications imposent que le courant consommé par cette alimentation soit constant et c'est le rôle de la source de courant 22 et du miroir de courant 20, 24 d'imposer cette constance. Là encore, lorsque le signal alternatif de conversation, présent sur la ligne et superposé à une composante continue présente sur la ligne, passe au-dessous de la tension continue Vs, une saturation du transistor 24 se produit et par conséquent le courant dans la ligne subit une discontinuité brutale de même que l'impédance en alternatif vue de l'entrée du circuit d'alimentation.

Ces discontinuités se traduisent par une distorsion importante et inacceptable des signaux émis et reçus sur la ligne téléphonique.

Les solutions qui ont été proposées jusqu'à maintenant consistent à prévoir une commutation d'impédance ou de source de courant, pour mettre en service une impédance ou une source de courant supplémentaire à partir du moment où la tension d'entrée descend au-dessous d'une valeur de référence Vréf que l'on choisira légèrement supérieure à la tension de sortie Vs ; ces solutions sont représentées aux figures 3 et 4 : la figure 3 correspond à une amélioration du schéma de la figure 1 et la figure 4 à une amélioration du schéma de la figure 2.

Sur la figure 3, on a rajouté, par rapport à la figure 1, deux interrupteurs 30 et 32, une impédance 34 et un comparateur (amplificateur différentiel) 36 qui commande en opposition de phase les deux interrupteurs.

Tant que la tension de sortie Va du pont redresseur est supérieure à la tension de référence Vréf (choisie légèrement supérieure à la tension de sortie Vs du circuit), l'interrupteur 30 est fermé et l'interrupteur 32 ouvert, de sorte que le circuit est le même qu'à la figure 1 ; lorsque la tension Va passe au-dessous de Vréf, et a fortiori lorsqu'elle passe au-dessous de Vs, le comparateur 36 ferme l'interrupteur 32 et ouvre l'interrupteur 30, de sorte que l'impédance vue de l'entrée du circuit reste constante (la valeur de l'impédance 34 étant choisie égale à celle de l'impédance 14).

De la même manière, on peut prévoir, comme on le voit sur la figure 4, une commutation de sources de courant lorsque la tension d'entrée Ve descend au-dessous d'une valeur de référence Vréf légèrement supérieure à la tension de sortie Vs, de sorte que, vue de l'entrée du circuit, le courant consommé peut rester constant sans discontinuité lorsque Ve descend au-dessous de Vs.

En réalité, ces circuits des figures 3 et 4 présentent deux types d'inconvénients :

— d'une part, le rendement de l'alimentation et affaibli, car la mise en service de l'impédance supplémentaire ou de la source de courant supplémentaire constitue une dérivation de courant vers la masse, donc une énergie perdue. Le rendement est d'autant plus faible que Vréf est écarté de Vs car la commutation sera d'autant plus fréquente ; or il faut garder un certain écart entre Vréf et Vs pour que le fonctionnement du circuit soit sûr ;

— d'autre part, au moment de la commutation, une certaine distorsion subsiste, notamment à cause du recouvrement des instants de fermeture et d'ouverture des interrupteurs, et de l'appariement imparfait des impédances et sources de courant commutées.

Cette distorsion subsiste même avec un dispositif du genre de celui du brevet DE 30 29 895.

Pour éliminer cet inconvénient, la présente invention propose, dans un circuit d'alimentation comprenant un montage régulateur de tension en série avec un transistor commandé par un montage régulateur de courant, de détecter l'instant réel où va se produire une saturation du montage régulateur de courant, saturation qui se produit lorsque la tension sur la ligne d'amenée d'énergie se rapproche trop de la tension de sortie du montage régulateur de tension, et de commander, en fonction de cette détection, la mise en service progressive d'une dérivation de courant en parallèle sur l'ensemble en série du transistor et du montage régulateur de tension.

Plus précisément, le circuit selon l'invention comprend un ensemble de deux transistors supplémentaires (deuxième et troisième transistors) en série, en parallèle sur l'ensemble du premier transistor et du montage régulateur de tension, le deuxième transistor étant commandé comme le premier par le montage régulateur de courant, et le troisième étant commandé par un moyen de détection de la saturation du montage régulateur de courant.

Ainsi, un courant est dérivé hors du montage régulateur de tension lorsque la tension d'entrée du circuit descend à une valeur qui est trop basse, par rapport à la tension de sortie du montage régulateur de tension, pour que le montage régulateur de courant puisse continuer à alimenter sans discontinuité de courant le montage régulateur de tension.

Le montage régulateur de courant comprend de préférence un étage de sortie constitué par un quatrième transistor dont le collecteur est relié à la base du premier transistor pour le commander, et le moyen de détection de la saturation est un anneau d'antisaturation entourant le collecteur de ce quatrième transistor, cet anneau fournissant un courant de commande du troisième transistor d'autant plus important que la saturation du quatrième transistor est plus grande.

D'autres caractéristiques et avantages de l'invention apparaîtront à la lecture de la description détaillée qui suit et qui est faite en référence aux dessins annexés dans lesquels :

— les figures 1 à 4 déjà décrites représentent l'art antérieur,

— la figure 5 représente un schéma-bloc d'un circuit d'alimentation conforme à l'invention,

— la figure 6 représente un exemple de réalisation concrète détaillée d'un circuit selon l'invention,

— la figure 7 représente un autre exemple de réalisation détaillée.

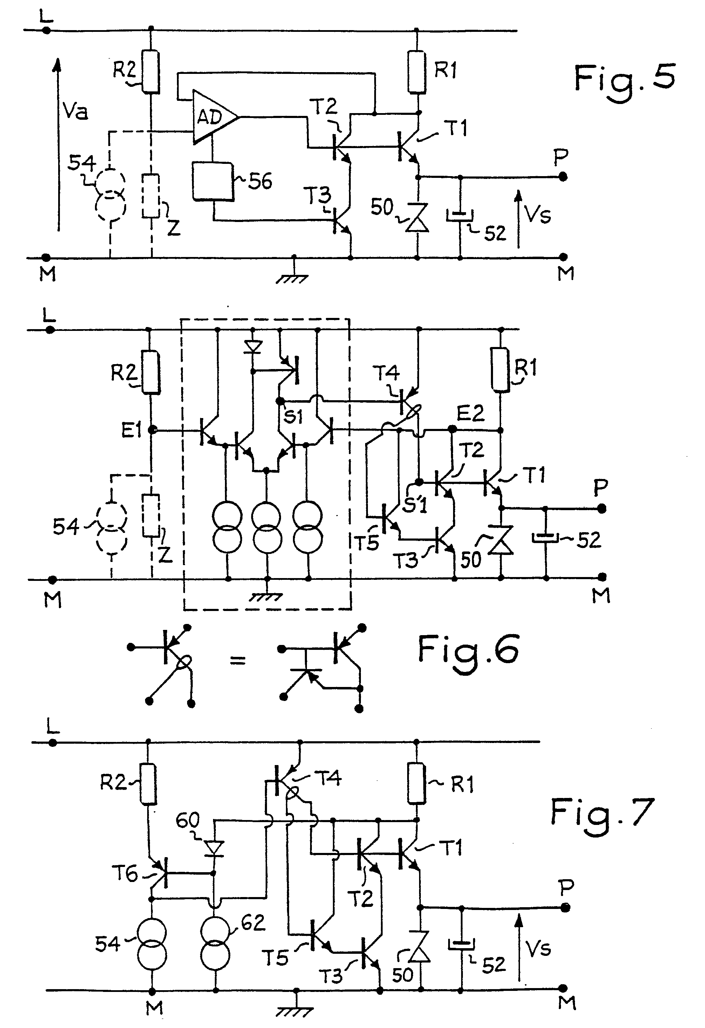

Sur la figure 5, le schéma du circuit d'alimentation comprend des bornes d'entrée L et M (qui peuvent correspondre à la sortie du pont redresseur des figures 1 et 3 lorsqu'il s'agit de l'alimentation d'une sonnerie de téléphone, ou aux bornes E et F des figures 2 et 4, raccordées à la ligne téléphonique par l'intermédiaire d'un pont de diodes, lorsqu'il s'agit du circuit d'alimentation d'un microprocesseur par exemple). La tension à ces bornes est appelée ici Va ; c'est une tension qui est la combinaison d'un signal alternatif (signal de sonnerie ou signal de parole) et éventuellement d'une composante continue (en mode parole) ; les bornes de sortie sont désignées par P et M, M étant une borne de masse commune à l'entrée et à la sortie. La tension de sortie Vs entre ces bornes P et M est la tension régulée et filtrée aux bornes d'un montage régulateur de tension qui peut comprendre un ensemble en parallèle d'une diode Zener 50 et d'un condensateur de lissage 52, comme aux figures 1 à 4.

Entre la borne L et cet ensemble en parallèle est prévu un ensemble en série d'une résistance R1 et d'un transistor NPN T1.

La base du transistor T1 est commandée par la sortie d'un amplificateur différentiel AD dont une entrée est reliée au point de jonction de la résistance R1 et du collecteur du transistor T1, et dont l'autre entrée est reliée à une résistance R2 reliée par ailleurs à la borne L. Cette deuxième entrée de l'amplificateur différentiel est par ailleurs reliée à la masse M par l'intermédiaire soit d'une impédance Z soit d'une source de courant 54 ; l'impédance Z et la source 54 ont été figurées en pointillés pour signifier que c'est l'une ou l'autre qui est utilisée selon l'utilisation du circuit d'alimentation ; pour l'alimentation de la sonnerie du téléphone, on pourra prévoir une impédance, tandis que pour l'alimentation d'un microprocesseur on pourra prévoir une source de courant.

L'amplificateur différentiel AD, le pont d'impédances R2, Z ou l'ensemble R2, 54, et la résistance R1 constituent un montage de régulation de courant qui commande le transistor T1 de manière à maintenir dans la résistance R1, donc dans le transistor T1 et dans le montage régulateur de tension (50, 52) un courant bien déterminé, qui est tel que la chute de tension dans la résistance R1 soit égale à la chute de tension dans la résistance R2. En réalité, il s'agit véritablement d'un montage régulateur de courant lorsqu'une source de courant 54 est connectée à la résistance R1 ; si c'est une impédance Z qui est connectée, le montage régulateur de courant agira aussi comme régulateur du courant dans le transistor T1, non pas cette fois pour le maintenir constant, mais plutôt pour l'ajuster à chaque instant de telle sorte que, vue de l'entrée du circuit d'alimentation, l'impédance de ce circuit paraisse constante.

Cependant, avec les seuls éléments qui viennent d'être décrits, le montage régulateur de courant ne remplit correctement son rôle que si la tension Va sur la ligne d'amenée d'énergie est supérieure à la somme de la tension de sortie Vs, de la chute de tension normale dans la résistance R1, et de la tension nécessaire à faire conduire le transistor T1, faute de quoi le transistor T1 ou le transistor qui le pilote dans l'amplificateur différentiel AD se sature et le courant dans la résistance R1 chute à une valeur qui est insuffisante et qui n'est plus contrôlée par le montage régulateur de courant.

C'est pourquoi on prévoit ici un deuxième transistor NPN T2 et un troisième transistor NPN T3, en série, l'ensemble étant en parallèle sur l'ensemble en série du montage régulateur de tension et du transistor T1 : les collecteurs des transistors T1 et T2 sont réunis et l'émetteur du transistor T3 est à la masse.

La base du transistor T2 est commandée par la sortie de l'amplificateur différentiel.

La base du transistor T3 est commandée par un élément de détection de saturation 56 qui a pour fonction de fournir un courant de commande augmentant avec l'état de saturation du montage régulateur de courant, donc avec l'état de saturation du transistor T1, ou du transistor qui le commande dans l'amplificateur AD.

Cet élément 56 a été représenté comme étant raccordé à l'amplificateur différentiel ; en effet, la détection du passage en état de saturation se fait de préférence au niveau de l'étage de sortie de l'amplificateur différentiel AD qui commande ce transistor T1.

Lorsqu'une tendance à la saturation se produit, le transistor T3 devient progressivement conducteur et, comme le transistor T2 est commandé par la même sortie que le transistor T1, il prend progressivement le relais de ce dernier en dirigeant vers la masse le courant qui doit circuler dans R1 pour que la chute de tension dans R1 reste en permanence égale à la chute de tension dans R2 malgré le passage de Va au-dessous de Vs.

Ce transfert progressif évite toute discontinuité de courant ou d'impédance et réduit donc au minimum les distorsions que l'on avait précédemment.

Un exemple de réalisation détaillée de circuit est représenté à la figure 6. Sur cette figure, les éléments L, M, P, R1, R2, 50, 52, 54, Z, T1, T2, T3 sont les mêmes qu'à la figure 5 et sont connectés exactement de la même manière.

L'amplificateur différentiel AD comprend un étage différentiel classique représenté dans un cadre pointillé et un étage de sortie constitué par un transistor PNP T4 dont la base est commandée par la sortie S1 de l'étage différentiel, dont l'émetteur est relié à la borne L et dont le collecteur constitue la sortie S'1 de l'amplificateur AD, sortie qui commande directement les bases des transistors T1 et T2. C'est ce transistor T4 qui tend à se saturer en premier (avant le transistor T1).

Le détecteur de saturation 56 de la figure 5 est constitué par un anneau d'antisaturation formé autour du collecteur du transistor PNP de sortie T4, et par un transistor NPN T5 dont la base est reliée à cet anneau de saturation et dont l'émetteur est relié à la base du transistor T3 pour commander la conduction de ce dernier en fonction de la saturation du transistor T4. Le collecteur du transistor T5 est relié au point de jonction de la résistance R1 et du transistor T1.

L'anneau d'antisaturation est, concrètement, un anneau semiconducteur de même type de conductivité que le collecteur et entourant complètement celui-ci, mais séparé de lui par une région semiconductrice étroite de type de conductivité opposé, de sorte qu'il se crée un transistor parasite entre collecteur et anneau d'antisaturation, transistor qui se polarise en direct lorsque le transistor principal se sature, et qui délivre sur son collecteur un courant d'autant plus grand que la saturation est plus grande ; l'anneau d'antisaturation permet donc de détecter facilement la saturation du transistor T4. A la partie inférieure de la figure 6 est indiqué un montage en transistors discrets qui pourrait remplacer le transistor T4.

Le transistor T5 amplifie ce courant de détection de saturation et l'utilise pour commander la base du transistor T3.

La figure 7 représente une variante de réalisation dans laquelle les éléments suivants sont inchangés par rapport à la figure 6 dans leur nature et leurs liaisons :
— montage régulateur de tension 50, 52,
— transistor de commande T1,
— résistance R1 définissant une chute de tension déterminée afin de mesurer le courant fixe dans le transistor T1,
— transistor supplémentaire T2 commandé en même temps que T1,
— transistor T3 établissant avec T2 une dérivation de courant vers la masse,
— transistor T4, PNP, constituant l'étage de sortie du montage régulateur de courant avec, comme moyen de détection de saturation de ce montage, un anneau d'antisaturation autour du collecteur de T4 et un transistor amplificateur T5 qui commande la base du transistor T3.

Seul le montage régulateur de courant est modifié (à l'exception de son étage de sortie T4 inchangé) : il comprend un ensemble en série d'une résistance R2, d'un transistor PNP T6 et d'une source de courant 54, entre la borne L et la borne M.

La base du transistor T4 de l'étage de sortie est reliée au point de jonction du collecteur du transistor T6 et de la source de courant 54. Par ailleurs, le point de jonction de la résistance R1 et du transistor T1 est relié par une diode 60 à la base du transistor T6 et cette base est reliée à la masse par une source de courant 62.

Les sources de courant 54 et 62 sont de préférence identiques et engendrent des chutes de tension identiques dans la diode 60 et dans la jonction émetteur-base du transistor T6, également réalisés à partir de transistors identiques.

Il en résulte que les chutes de tension dans R1 et R2 doivent être identiques, le montage régulateur de courant agissant par l'intermédiaire du transistor T4 sur le transistor T1 pour tirer un courant tel que ces chutes de tension restent identiques.

Le courant tiré est fixe et dépend du rapport entre les résistances R1 et R2.

Lorsqu'il y a saturation du transistor T4, c'est le transistor T2 qui se met à dériver le courant nécessaire pour maintenir la chute de tension imposée dans R1 sans faire chuter la tension de sortie Vs. Cette dérivation est possible grâce au transistor T3 qui est rendu conducteur par l'anneau d'antisaturation.

## Revendications

1. Circuit d'alimentation en tension continue prélevant son énergie sur une ligne recevant un signal alternatif, comprenant un montage régulateur de tension (50, 52) en série avec un transistor (T1) commandé par un montage régulateur de courant (AD, R1, R2, 54) avec en outre un transistor auxiliaire dit « troisième transistor » (T3) ayant sa base commandée par un moyen (56) de détection de la saturation du montage régulateur de courant, de manière qu'un courant soit dérivé hors du montage régulateur de tension lorsque la tension d'entrée du circuit descend à une valeur trop basse, par rapport à la tension de sortie du montage régulateur de tension, pour que le montage régulateur de courant puisse continuer à alimenter sans discontinuité de courant le montage régulateur de tension, caractérisé en ce qu'il est prévu en outre un deuxième transistor auxiliaire dit « deuxième transistor » (T2), en série avec le troisième transistor (T3), l'ensemble en série des deuxième et troisième transistors étant en parallèle sur l'ensemble en série du premier transistor (T1) et du montage régulateur de tension (50, 52), le deuxième transistor ayant sa base commandée comme le premier par le montage régulateur de courant.

2. Circuit selon la revendication 1, caractérisé en ce que le montage régulateur de courant comprend un étage de sortie constitué par un quatrième transistor (T4) dont le collecteur est relié à la base du premier transistor et en ce que le détecteur de saturation comprend un anneau d'antisaturation entourant le collecteur du quatrième transistor.

3. Circuit selon la revendication 2, caractérisé en ce que l'anneau d'antisaturation est relié à la base d'un cinquième transistor (T5) dont l'émetteur commande la base du troisième et dont le collecteur est relié aux collecteurs du premier et du second transistors.

## Claims

1. A DC supply circuit deriving its energy from a line receiving an AC signal, the circuit comprising a voltage regulating device (50, 52) in series with a transistor (T1) controlled by a current regulating device (AD, R1, R2, 54), further comprising an auxiliary transistor called third transistor (T3), the base of which is controlled by a means (56) for detecting the saturation of the current regulating device, such that a current is derived outside the voltage regulating device, if the input voltage of the circuit decreases to an amount which is too low with respect to the output voltage of the voltage regulating device, such that the current regulating device may continue without discontinuity to feed the voltage regulating device, characterized in that a second auxiliary transistor called second transistor (T2) is further provided in series with the third transistor (T3), the series assembly of the second and third transistors being mounted parallelly to the series assembly of the first transistor (T1) and of the voltage regulating device (50, 52), the base of the second transistor being controlled by the current regulating device in the same manner as the first transistor.

2. A circuit according to claim 1, characterized in that the current regulating device includes an output stage constituted by a fourth transistor (T4), the collector of which is connected to the base of the first transistor, and that the saturation detector comprises an antisaturation ring surrounding the collector of the fourth transistor.

3. A circuit according to claim 2, characterized in that the antisaturation ring is connected to the base of a fifth transistor (T5), the emitter of which controls the base of the third transistor and the collector of which is connected to the collectors of the first and of the second transistors.

## Patentansprüche

1. Gleichspannungsspeisekreis, der seine Energie einer ein Wechselstromsignal empfangenden Leitung entnimmt, mit einer Spannungsregelschaltung (50, 52) in Reihe mit einem von einer Stromregelschaltung (AD, R1, R2, 54) gesteuerten Transistor (T1), wobei weiter ein Hilfstransistor (T3), dritter Transistor genannt, vorgesehen ist, dessen Basis von einem Mittel (56) zur Erfassung der Sättigung der Stromregelschaltung so gesteuert wird, daß ein Strom außerhalb der Spannungsregelschaltung abgeleitet wird, wenn die Eingangsspannung des Schaltkreises auf einen zu niedrigen Wert bezüglich der Ausgangsspannung der Spannungsregelschaltung absinkt, so daß die Stromregelschaltung ohne Stromunterbrechung die Spannungsregelschaltung weiter versorgen kann, dadurch gekennzeichnet, daß außerdem ein zweiter Hilfstransistor (T2), zweiter Transistor genannt, in Reihe mit dem dritten Transistor (T3) vorgeshen ist und die Serienschaltung des zweiten und des dritten Transistors parallel zur Serienschaltung des ersten Transistors (T1) und der Spannungsregelschaltung (50, 52) angeordnet ist, wobei die Basis des zweiten Transistors wie die des ersten Transistors durch die Stromregelschaltung gesteuert wird.

2. Schaltkreis nach Anspruch 1, dadurch gekennzeichnet, daß die Stromregelschaltung eine Ausgangsstufe aufweist, die von einem vierten Transistor (T4) gebildet wird, dessen Kollektor an die Basis des ersten Transistors angeschlossen ist, und daß das Mittel zum Erfassen der Sättigung einen Antisaturationsring enthält, der den Kollektor des vierten Transistors umgibt.

3. Schaltkreis nach Anspruch 2, dadurch gekennzeichnet, daß der Antisaturationsring an die Basis eines fünften Transistors (T5) angeschlossen ist, dessen Emitter die Basis des dritten Transistors steuert und dessen Kollektor an die Kollektoren des ersten und des zweiten Transistors angeschlossen ist.

Fig.1

Fig.2

Fig.3

Fig.4

Fig. 5

Fig. 6

Fig. 7

2